**Europäisches Patentamt**

**European Patent Office**

**Office européen des brevets**

(19)

(11) Veröffentlichungsnummer: **0 409 819 A2**

## (12) EUROPÄISCHE PATENTANMELDUNG

(21) Anmeldenummer: **90890214.1**

(22) Anmeldetag: **18.07.90**

(51) Int. Cl.⁵: **H04Q 7/04**, H04B 1/38, H04M 1/72

(30) Priorität: **20.07.89 AT 1752/89**

(43) Veröffentlichungstag der Anmeldung:
**23.01.91 Patentblatt 91/04**

(84) Benannte Vertragsstaaten:
**AT BE CH DE DK ES FR GB GR IT LI LU NL SE**

(71) Anmelder: **Alcatel Austria Aktiengesellschaft
Scheydgasse 41
A-1210 Wien(AT)**

(72) Erfinder: **Strasser, Helmut, Dipl.-Ing.
Hockegasse 69
A-1180 Wien(AT)**

(54) **Tragbares Endgerät der Nachrichtentechnik.**

(57) Tragbares Endgerät der Nachrichtentechnik, beispielsweise Handmobiltelefon, das zur Stromversorgung einen Handdynamo enthält. Damit ist das Gerät von Batterien unabhängig bzw. kann nach Ausfall der Batterie ein Notbetrieb aufrechterhalten werden. Der Handdynamo wird vorzugsweise mittels einer Zahnstange angetrieben, die über einen aus der Seitenwand des Gerätes herausragenden Betätigungshebel bewegt wird.

Fig.

EP 0 409 819 A2

Die Erfindung betrifft ein tragbares Endgerät der Nachrichtentechnik, vorzugsweise ein Handmobiltelefon, das drahtlos mit anderen Endgeräten bzw. mit einem Nachrichtenübertragungsnetz verbunden ist, wobei die Stromversorgung mittels Batterie bzw. aufladbaren Akkumulatorbatterien erfolgt.

Derartige Geräte werden verwendet um möglichst ortsunabhängig Sprache, Daten oder Bildsignale übertragen zu können. Handmobiltelefone, die in der Regel mit aufladbaren Akkumulatoren betrieben werden, haben bereits ein "Taschenformat" erreicht, die Einhandbetrieb erlauben. Obwohl die Leistungsaufnahme dieser Geräte durch besondere schaltungstechnische Maßnahmen auf ein Minimum reduziert ist, haben die für den Handbetrieb notwendigen Akkumulatoren aufgrund ihrer geringen Größe eine nur geringe Kapazität, sodaß diese oft schon nach einer Betriebsstunde neu aufgeladen werden müssen. Die Betriebszeit verkürzt sich sehr drastisch, wenn das Gerät mit eingebauter Freisprecheinrichtung betrieben wird, da diese den Stromverbrauch erheblich erhöht.

Es ergibt sich somit bei den bekannten Geräten der Nachteil, daß während des Nachladevorganges der Akkus das Gerät nicht oder nur bedingt verfügbar ist. Besonders nachteilig ist es, wenn unterwegs die Batterien verbraucht werden, und keine Möglichkeit besteht, neue Batterien zu bekommen bzw. die vorhandenen wiederaufzuladen.

Es ist daher Aufgabe der Erfindung, die Stromversorgungseinrichtung obgenannter Geräte so auszubilden, daß sie batterieunabhängig arbeiten, zumindest aber einen Notbetrieb aufrechterhalten können.

Die Erfindung löst diese Aufgabe dadurch, daß die Stromversorgungseinrichtung einen an sich bekannten Handdynamo enthält. Da der Handdynamo mit Muskelkraft betrieben wird ist die Betriebsdauer des Gerätes nur durch die Ausdauer der Bedienungsperson begrenzt.

Der Handdynamo kann zur direkten Stromversorgung des Gerätes oder in den Gesprächspausen zum Aufladen vorhandener Akkus dienen. Zu diesem Zweck ist der Handdynamo nach einer Weiterbildung der Erfindung wahlweise an die Stromversorgungseinrichtung des Gerätes oder an die Batterieladeeinrichtung anschließbar.

Die Erfindung kann dadurch weitergebildet werden, daß die Umschaltung auf Handdynamo durch eine Alarmeinrichtung optisch und/oder akustisch angezeigt wird. Damit wird der Benutzer aufgefordert, bei weiterer Benützung des Gerätes den Handdynamo zu betätigen.

Nach einer weiteren Ausgestaltung der Erfindung wird die Stromversorgungseinrichtung bei Unterschreitung einer vorbestimmten Batteriemindestspannung automatisch an den Handdynamo angeschaltet. In diesem Falle dient der Handdynamo vor allem zum Notbetrieb bei Batterieausfall. Man kann zumindest kurzzeitig einen Notruf aussenden, bzw. ein Kurzgespräch führen.

Die an sich bekannten Handdynamos sind in der Regel mittels eines Handkurbelantriebes oder mittels einer mit einem Betätigungshebel versehenen Zahnstange, die ihrerseits auf ein mit dem Handdynamo verbundenes Zahnrad wirkt, betätigbar. Die letztere Alternative wird in einer Weiterbildung der Erfindung verwendet. Die Betätigungseinrichtung benützt zur Drehzahlstabilisierung meist ein Schwungrad oder einen Drehzahlregler. Der Betätigungshebel und damit auch die Zahnstange werden nach Erreichen der Endlage durch eine Rückholfeder in die Ausgangslage zurückgestellt.

Bei einer besonders vorteilhaften Weiterbildung der Erfindung ist der Betätigungshebel des Handdynamos an einer der Seitenwände des Endgerätes vorgesehen. Dadurch kann auch die Stromversorgung Einhandbetrieb gewährleistet werden.

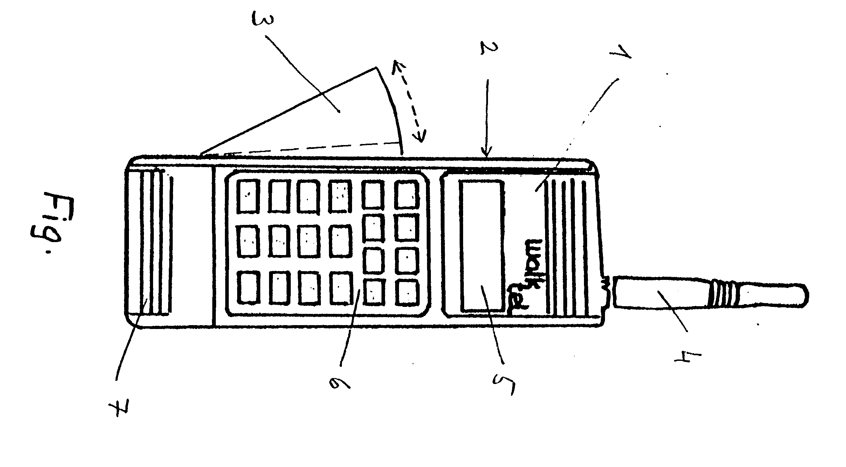

Die Erfindung ist nachfolgend anhand eines in der Zeichnung dargestellten Ausführungsbeispiels näher beschrieben.

Die Fig. zeigt ein bekanntes Handmobiltelefon 1 mit einer Antenne 4, einem Tastenfeld 6, einem Anzeigefeld 5 und einem Batteriefach 7. Im Gerät 1 eingebaut befindet sich ein Handdynamo, dessen Betätigungshebel 3 aus der Seitenwand 2 soweit herausragt, daß er zwischen den beiden gezeichneten Endlagen hin - und herbewegbar ist. Diese Bewegung wird über eine Zahnstange auf ein Zahnrad übertragen, das über eine Richtungskupplung mit einem Schwungrad kuppelbar ist. Die Richtungskupplung bewirkt, daß nur die in eine Richtung wirkende Bewegungsenergie der Zahnstange auf die Schwungmasse übertragen wird und die Zahnstange im ausgekuppelten Zustand durch eine Rückholfeder wieder in die Ausgangslage zurückgebracht wird. Da die Funktion eines Handdynamos an sich bekannt ist, wird sie hier nicht näher beschrieben.

## Ansprüche

1. Tragbares Endgerät der Nachrichtentechnik, vorzugsweise Handmobiltelefon, das drahtlos mit anderen Endgeräten bzw. mit einem Nachrichtenübertragungsnetz verbunden ist, wobei die Stromversorgung vorzugsweise mittels Batterien bzw. aufladbaren Akkumulatorbatterien erfolgt, **dadurch gekennzeichnet,** daß die Stromversorgungseinrichtung einen an sich bekannten Handdynamo enthält.

2. Tragbares Endgerät nach Anspruch 1, **dadurch gekennzeichnet,** daß der Handdynamo wahlweise an die Stromversorgungseinrichtung oder an die Batterieladeeinrichtung anschließbar ist.

3. Tragbares Endgerät nach Anspruch 1, **dadurch gekennzeichnet**, daß die Stromversorgungseinrichtung bei Unterschreitung einer vorbestimmten Batteriemindestspannung automatisch an den Handdynamo geschaltet wird.

4. Tragbares Endgerät nach Anspruch 3, **dadurch gekennzeichnet**, daß die Umschaltung auf Handdynamo durch eine Alarmeinrichtung optisch und/oder akustisch angezeigt wird.

5. Tragbares Endgerät nach einem der Ansprüche 1 bis 4, **dadurch gekennzeichnet**, daß der Handdynamo in an sich bekannter Weise mittels einer mit einem Betätigungshebel (3) versehenen Zahnstange, die auf ein mit dem Dynamo verbundenes Zahnrad wirkt, betätigbar ist.

6. Tragbares Endgerät nach Anspruch 5, **dadurch gekennzeichnet**, daß der Betätigungshebel (3) an einer der Seitenwände (2) des Endgerätes (1) vorgesehen ist.

Fig.